# EUROPEAN PATENT APPLICATION

(11) **EP 3 806 545 A1**
(43) Date of publication of application: **14.04.2021**
(21) Application number: 18921903.3
(22) Date of filing: 07.06.2018
(51) Int. Cl.: H04W 48/10

(54) **METHOD, DEVICE, AND SYSTEM FOR SENDING SERVICE REQUEST**

(71) Applicant: HUAWEI TECHNOLOGIES CO., LTD., Shenzhen, Guangdong 518129 (CN)
(72) Inventor: WANG, Hong, Shenzhen, Guangdong 518129 (CN); TANG, Xun, Shenzhen, Guangdong 518129 (CN); ZHANG, Jian, Shenzhen, Guangdong 518129 (CN)
(74) Representative: Maiwald Patent- und Rechtsanwaltsgesellschaft mbH
(86) International application number: PCT/CN2018/090309
(87) International publication number: WO 2019/232757

(57) **Abstract**

Embodiments of this application provide a method and an apparatus for sending a request of service, and a system, and relate to the communications field, to control access of a new service of a terminal device in a connected mode, and further control load of a network side device. Specifically, the method includes: receiving, by a terminal device, first access control information from a first network device; and in a connected mode, if the first access control information indicates that access of a first service is barred, stopping, by the terminal device, sending a request of service of the first service to the first network device. This application is used to send a request of service.

## Description

### TECHNICAL FIELD

This application relates to the communications field, and in particular, to a method and an apparatus for sending a request of service, and a system.

### BACKGROUND

In mobile communication, before initiating a service, user equipment (User Equipment, UE) in an idle mode first sends a connection establishment request to a network side base station, to establish a radio link connection with the base station, and enter a connected mode. The UE in the connected mode performs data transmission with the base station. In the prior art, a base station controls access of some communication services. For example, the base station controls, by using a broadcast message, access of some types of communication services to be allowed, and access of some types of communication services to be not allowed; or determines, based on a random number generated by the UE, whether access of some types of communication services is allowed. In this way, when the UE requests to establish a connection, the UE checks, based on content broadcast by the base station, whether a type of a communication service that triggers the UE to request to establish the connection is allowed by the base station. If the type of the service initiated by the UE is not allowed by the base station, the UE skips sending the connection establishment request. Otherwise, the UE sends the connection establishment request.

However, not only the UE in the idle mode initiates a communication service to the base station, but also the UE in the connected mode initiates some communication services, for example, makes a call to the outside when downloading a file, or receives a call when browsing a web page. In this case, because the UE is already in the connected mode, the UE does not need to check whether the newly initiated services are allowed or barred by the eNB. If a large quantity of UEs are currently performing emergency communication with the base station, and load of the base station has reached an acceptable degree, if the UE in the connected mode initiates a new service, there is an impact on a network, causing overload of the base station, and interrupting the ongoing emergency communication.

### SUMMARY

Embodiments of this application provide a method and a device for sending a request of service, and a system, to control access of a new service of a terminal device in a connected mode, and further control load of a network side device.

To achieve the foregoing objectives, the following technical solutions are used in the embodiments of this application.

According to a first aspect, a method for sending a request of service is provided. The method includes: receiving, by a terminal device, first access control information from a first network device; and in a connected mode, if the first access control information indicates that access of a first service is barred, stopping, by the terminal device, sending a request of service of the first service to the first network device.

According to the method for sending a request of service provided in this application, based on the indication of the first access control information received from the first network device, the access of the first service is barred, and the terminal device in the connected mode stops sending the request of service of the first service to the first network device, so that access of a new service of the terminal device in the connected mode is controlled, and load of the first network device is controlled, thereby preventing overload from affecting network quality of service.

The new service is another service initiated by the terminal device in the connected mode. For example, when the terminal device is performing a voice call service, the terminal device newly initiates a web page browsing service. A type of the new service is not specifically limited in this application.

It should be noted that service initiation described in this specification refers to a process in which the terminal device implements service communication. When a service is initiated, a message sent by the terminal device may be referred to as a request of service or service signaling that is of the service and that is sent by the terminal device. Certainly, the message may have another name. This is not specifically limited in this application.

Optionally, the terminal device may be UE or another user side device, or the terminal device may be some function units or chips in a user side device. A type of the terminal device is not specifically limited in this application.

Optionally, the first network device may be a part or all of a base station. When the first network device is a part of a base station, the first network device may be a function unit or at least one chip in the base station. The base station is an access network device in a wireless network, and is responsible for connecting the terminal device to a core network, to implement communication between the terminal device and the core network. For example, the base station may be an evolved NodeB (evolved nodeB, eNB) in a 4th generation (4th generation, 4G) mobile communications network, or the base station may be a next-generation radio access base station (NR NodeB, gNB) in a 5th generation (5th generation, 5G) mobile communications network. A type of the base station is not limited in this application. In different types of networks, there may be different types of base stations.

Optionally, a second network device may be a mobility management network element. The mobility management network element is a network element responsible for mobility management in a network. For example, the mobility management network element may be a mobility management entity (mobility management entity, MME) in a 4G network, or the mobility management network element may be an access and mobility management function (Access and Mobility Management Function, AMF) entity in a 5G network. A type of the mobility management network element is not limited in this application. In different types of networks, there may be different types of mobility management network elements. It should be noted that when the first network device is a mobility management network element, the terminal device receives the first access control information from the first network device by using the base station.

Certainly, the first network device may alternatively be another type of network device. A type of the first network device is not specifically limited in this application.

With reference to the first aspect, in a possible implementation, the method for sending a request of service provided in this application may further include: in the connected mode, if the access of the first service is not barred, sending, by the terminal device, the request of service of the first service to the first network device. Based on the indication of the first access control information received from the first network device, the access of the first service is not barred, and the terminal device in the connected mode sends the request of service of the first service to the first network device, so that access of a service of the terminal device in the connected mode is controlled, and load of the first network device is controlled, thereby preventing overload from affecting network quality of service.

With reference to any one of the first aspect or the foregoing possible implementations, in another possible implementation, the request of service may include: a public data network (Public Data Network, PDN) connection request, a bearer resource modification request (bearer resource modification request), or a service request (service request). Certainly, a type of the request of service is not limited thereto, and the request of service may alternatively be another service request supported by the terminal device.

For example, the service request may be a service request for browsing a web page, a service request for making a call, or another service request. Details are not described in this application.

It should be noted that the first service is any service of the terminal device, and does not refer to a specific service.

With reference to any one of the first aspect or the foregoing possible implementations, in another possible implementation, the receiving, by a terminal device, first access control information from a first network device may specifically include: receiving, by the terminal device, a system message from the first network device, where the system message includes the first access control information. The system message is sent by the first network device through broadcast.

Optionally, the system message may be a system information block type2 (System Information Block Type2, SIB2). Alternatively, the system message may be a message specially configured for sending the first access control information. A type of the system message is not specifically limited in this application.

With reference to any one of the first aspect or the foregoing possible implementations, in another possible implementation, the receiving, by a terminal device, first access control information from a first network device may specifically include: receiving, by the terminal device, dedicated signaling from the first network device, where the dedicated signaling includes the first access control information.

Optionally, the dedicated signaling may include an RRC connection reconfiguration message. Alternatively, the dedicated signaling may be a message specially configured for sending the first access control information. A type of the dedicated signaling is not specifically limited in this application.

It should be noted that when receiving the first access control information from the first network device, the terminal device may be in an idle mode (RRC_IDLE) or in the connected mode (RRC_CONNECTED). This is not specifically limited in this application.

Optionally, after receiving the first access control information, the terminal device may determine, in the connected mode, whether the access of the first service indicated by the first access control information is barred, or may determine, in the idle mode, whether the access of the first service indicated by the first access control information is barred. This is not specifically limited in this application.

With reference to any one of the first aspect or the foregoing possible implementations, in another possible implementation, the first access control information may include at least one of the following information: enabling indication information, a type of a service allowed to be initiated, a type of a service barred from being initiated, a type of a terminal device allowed to initiate a service, a type of a terminal device barred from initiating a service, or indication information for enabling an access control strategy. The enabling indication information is used to indicate whether the terminal device needs to determine, based on the first access control information, whether the access of the first service is barred. It should be noted that in this implementation, only possible content of the first access control information is listed, and content of the first access control information is not specifically limited. During actual application, the content of the first access control information may be configured based on an actual requirement.

With reference to any one of the first aspect or the foregoing possible implementations, in another possible implementation, the access control strategy may include at least one of the following: an access class barring (Access Class Barring, ACB) strategy, a service-specific access control (Service Specific Access Control, SSAC) strategy, an ACB skip (ACB skip) strategy, an extended access barring (Extended Access Barring, EAB) strategy, or an application specific congestion control for data communication (Application specific Congestion control for Data Communication, ACDC) strategy. It should be noted that in this implementation, only possible content of the access control strategy is listed, and content of the access control strategy is not specifically limited. During actual application, the content of the access control strategy may be configured based on an actual requirement.

With reference to any one of the first aspect or the foregoing possible implementations, in another possible implementation, the terminal device may include an access stratum (Access Stratum, AS) and a non-access stratum (Non Access Stratum, NAS). The receiving, by a terminal device, first access control information from a first network device may be specifically implemented as: receiving, by the AS stratum, the first access control information from the first network device. The NAS stratum is an upper layer, and the AS stratum is a lower layer. The AS stratum receives information or a message from another device, and the NAS stratum sends information or a message to another device by using the AS stratum.

It should be noted that, performing an operation by the NAS stratum described in this specification may be replaced with performing the operation by an upper layer; performing an operation by the AS stratum described in this specification may be replaced with performing the operation by a lower layer.

With reference to any one of the first aspect or the foregoing possible implementations, in another possible implementation, the method for sending a request of service provided in this application may further include: sending, by the AS stratum, the first access control information to the NAS stratum; and determining, by the NAS stratum based on the first access control information, whether the access of the first service is barred. Correspondingly, the stopping, by the terminal device, sending a request of service of the first service to the first network device includes: stopping, by the NAS stratum, sending service request signaling of the first service to the AS stratum. In this implementation, the NAS stratum determines whether to send the request of service, and the AS stratum forwards only the received first access control information.

With reference to any one of the first aspect or the foregoing possible implementations, in another possible implementation, the method for sending a request of service provided in this application may further include: extracting, by the AS stratum, first indication information from the first access control information, and sending, by the AS stratum, the first indication information to the NAS stratum; and determining, by the NAS stratum based on the first indication information, whether the access of the first service is barred. Correspondingly, the stopping, by the terminal device, sending a request of service of the first service to the first network device includes: stopping, by the NAS stratum, sending service request signaling of the first service to the AS stratum. In this implementation, the NAS stratum determines whether to send a request of service, and the AS stratum parses the received first access control information, extracts internal upper-layer NAS information, and forwards the internal upper-layer NAS information to the NAS stratum.

Determining, by the NAS stratum based on the first access control information, whether the access of the first service is barred may be performed by the NAS stratum when initiating the first service in the connected mode or before initiating the first service in the connected mode, or may be performed by the NAS stratum in the idle mode. This is not specifically limited in this application.

With reference to any one of the first aspect or the foregoing possible implementations, in another possible implementation, the method for sending a request of service provided in this application may further include: sending, by the NAS stratum in the connected mode, service request signaling of the first service to the AS stratum, and determining, by the AS stratum based on the first access control information and the service request signaling of the first service, whether the access of the first service is barred. Correspondingly, the stopping, by the terminal device, sending a request of service of the first service to the first network device includes: stopping, by the AS stratum, sending the service request signaling of the first service to the first network device. In this implementation, the AS stratum determines whether to send the request of service to a network side, the AS stratum receives the service request signaling that is of the first service and that is sent by the NAS stratum, and the AS stratum determines, based on the received first access control information, whether to send the service request signaling of the first service to the network side.

With reference to any one of the first aspect or the foregoing possible implementations, in another possible implementation, the method for sending a request of service provided in this application may further include: sending, by the NAS stratum in the connected mode, service request signaling of the first service and access control strategy indication information to the AS stratum, where the AS stratum determines, with reference to an access control strategy indicated by the access control strategy indication information and based on the first access control information and the request signaling of the first service, whether the access of the first service is barred.

With reference to any one of the first aspect or the foregoing possible implementations, in another possible implementation, the determining, by the AS stratum based on the first access control information and the service request signaling of the first service, whether the access of the first service is barred includes: parsing, by the AS stratum, the service request signaling of the first service, to obtain a service type of the first service; and determining, by the AS stratum based on the first access control information and the service type of the first service, whether the access of the first service is barred.

With reference to any one of the first aspect or the foregoing possible implementations, in another possible implementation, the method for sending a request of service provided in this application may further include: when sending the service request signaling of the first service to the AS stratum, further sending, by the NAS stratum in the connected mode, the service type of the first service to the AS stratum. Correspondingly, the determining, by the AS stratum based on the first access control information and the service request signaling of the first service, whether the access of the first service is barred includes: determining, by the AS stratum based on the first access control information and the service type of the first service, whether the access of the first service is barred.

With reference to any one of the first aspect or the foregoing possible implementations, in another possible implementation, when the AS stratum determines that the access of the first service is barred, the method for sending a request of service provided in this application may further include: sending, by the AS stratum, response information to the NAS stratum, where the response information indicates that the access of the first service is barred.

With reference to any one of the first aspect or the foregoing possible implementations, in another possible implementation, the method for sending a request of service provided in this application may further include: when sending the response information to the NAS stratum, sending, by the AS stratum to the NAS stratum, a cause why the access of the first service is barred.

It should be noted that the method for sending a request of service provided in any one of the first aspect or the possible implementations of the first aspect may be performed by the terminal device, or may be performed by a function unit or a chip in the terminal device. This is not specifically limited in this application.

According to a second aspect, this application provides another method for sending a request of service, including: determining first access control information, where the first access control message is used to control a request of service of a terminal device in a connected mode; and sending the first access control information.

According to the method for sending a request of service provided in this application, the request of service of the terminal device in the connected mode is controlled by using the first access control information, so that service access of the terminal device in the connected mode is controlled, and load of a network side is controlled, thereby preventing overload from affecting network quality of service.

It should be noted that the first access control information may be determined periodically, or may be determined when network load meets a preset condition. An occasion for determining the first access control information is not specifically limited in this application.

With reference to the second aspect, in a possible implementation, the request of service may include a PDN connection request, a bearer resource modification request, or a service request. Certainly, a type of the request of service is not limited thereto, and the request of service may alternatively be another service request supported by the terminal device.

With reference to any one of the second aspect or the foregoing possible implementations, in another possible implementation, the sending the first access control information may include: broadcasting a system message, where the system message includes the first access control information; or sending dedicated signaling, where the dedicated signaling includes the first access control information.

Optionally, the system message may include a SIB2 message. Alternatively, the system message may be a message specially configured for sending the first access control information. A type of the system message is not specifically limited in this application. Optionally, the dedicated signaling may include an RRC connection reconfiguration message. Alternatively, the dedicated signaling may be a message specially configured for sending the first access control information. A type of the dedicated signaling is not specifically limited in this application.

With reference to any one of the second aspect or the foregoing possible implementations, in another possible implementation, the first access control information includes at least one of the following information: enabling indication information, a type of a service allowed to be initiated, a type of a service barred from being initiated, a type of a terminal device allowed to initiate a service, a type of a terminal device barred from initiating a service, or indication information for enabling an access control strategy. The enabling indication information is used to indicate whether the terminal device needs to determine, based on the first access control information, whether the access of the first service is barred.

With reference to any one of the second aspect or the foregoing possible implementations, in another possible implementation, the access control strategy may include at least one of the following: an ACB strategy, an SSAC strategy, an ACB skip strategy, an EAB strategy, or an ACDC policy in data communication. It should be noted that in this implementation, only possible content of the access control strategy is listed, and content of the access control strategy is not specifically limited. During actual application, the content of the access control strategy may be configured based on an actual requirement.

With reference to any one of the second aspect or the foregoing possible implementations, in another possible implementation, the method for sending a request of service provided in the second aspect of this application may further include: determining the first access control information, which may be specifically implemented as: determining the first access control information based on a load status of the base station. In this implementation, a device that performs the method for sending a request of service provided in the second aspect actively determines the first access control information based on load of the device, thereby saving system transmission resources.

A manner of determining the first access control information based on the load status may be configured based on an actual requirement. This is not specifically limited in this application. For example, a preset correspondence is preconfigured, and the preset correspondence includes different load statuses and corresponding content of the first access control information. The content of the first access control information may be obtained by querying the preset correspondence when the first access control information is determined. For another example, a model of a load status and content of the first access control information is pre-established. Content of the first access control information is determined based on the model and a load status.

With reference to any one of the second aspect or the foregoing possible implementations, in another possible implementation, the method for sending a request of service provided in the second aspect of this application may further include: receiving second access control information from a second network device, where the second access control information is used to control the request of service of the terminal device in the connected mode. Correspondingly, the determining first access control information may be specifically implemented as: determining the first access control information based on the second access control information.

A manner of determining the first access control information based on the second access control information may be configured based on an actual requirement. This is not specifically limited in this application. For example, content of the second access control information may be directly the content of the first access control information. For another example, a preset correspondence is preconfigured, and the preset correspondence includes different content of the second access control information and corresponding content of the first access control information. The content of the first access control information may be obtained by querying the preset correspondence when the first access control information is determined.

With reference to any one of the second aspect or the foregoing possible implementations, in another possible implementation, the method for sending a request of service provided in this application may further include: sending, to the second network device, load indication information used to indicate a load status. In this way, the second network device determines the second access control information based on the load indication information.

It should be noted that the method for sending a request of service provided in any one of the second aspect or the possible implementations of the second aspect may be performed by the first network device, or may be performed by a function unit or a chip in the first network device. This is not specifically limited in this application. The first network device has been described in detail in the first aspect, and details are not described herein again.

According to a third aspect, another method for sending a request of service is provided. The method includes: determining second access control information, where the second access control information is used to control a request of service of a terminal device in a connected mode; and sending the second access control information to a first network device or the terminal device.

According to the method for sending a request of service provided in this application, the request of service of the terminal device in the connected mode is controlled by using the second access control information, so that service access of the terminal device in the connected mode is controlled, and load of a network side is controlled, thereby preventing overload from affecting network quality of service.

With reference to the third aspect, in a possible implementation, the method for sending a request of service provided in this application may further include: receiving, from the first network device, load indication information used to indicate a load status of the first network device. Correspondingly, the determining second access control information may be specifically implemented as: determining the second access control information based on the load indication information.

A manner of determining the second access control information based on the load indication information may be configured based on an actual requirement. This is not specifically limited in this application. For example, a preset correspondence is preconfigured, and the preset correspondence includes different load statuses and corresponding content of the second access control information. The content may be obtained by querying the preset correspondence when the second access control information is determined. For another example, a model of a load status and content of the second access control information is pre-established. Content of the second access control information is determined based on the model and a load status.

It should be noted that the method for sending a request of service provided in any one of the third aspect or the possible implementations of the third aspect may be performed by the second network device, or may be performed by a function unit or a chip in the second network device. This is not specifically limited in this application. The second network device has been described in detail in the first aspect, and details are not described herein again.

According to a fourth aspect, an embodiment of this application provides a terminal device. The terminal device may implement functions of the terminal device in the foregoing method examples, and the functions may be implemented by hardware, or may be implemented by hardware by executing corresponding software. The hardware or the software includes one or more modules corresponding to the functions.

With reference to the fourth aspect, in a possible implementation, a structure of the terminal device includes a processor and a transceiver. The processor is configured to support the terminal device in performing the corresponding functions in the foregoing methods. The transceiver is configured to support communication between the terminal device and another device. The terminal device may further include a memory. The memory is configured to couple to the processor, and the memory stores a program instruction and data that are necessary for the terminal device.

According to a fifth aspect, an embodiment of this application provides a first network device. The first network device may implement functions of the first network device in the foregoing method examples, and the functions may be implemented by hardware, or may be implemented by hardware by executing corresponding software. The hardware or the software includes one or more modules corresponding to the functions.

With reference to the fifth aspect, in a possible implementation, a structure of the first network device includes a processor and a transceiver. The processor is configured to support the first network device in performing the corresponding functions in the foregoing methods. The transceiver is configured to support communication between the first network device and another device. The first network device may further include a memory. The memory is configured to couple to the processor, and the memory stores a program instruction and data that are necessary for the first network device.

According to a sixth aspect, an embodiment of this application provides a second network device. The second network device may implement functions of the second network device in the foregoing method examples, and the functions may be implemented by hardware, or may be implemented by hardware by executing corresponding software. The hardware or the software includes one or more modules corresponding to the functions.

With reference to the sixth aspect, in a possible implementation, a structure of the second network device includes a processor and a transceiver. The processor is configured to support the second network device in performing the corresponding functions in the foregoing methods. The transceiver is configured to support communication between the second network device and another device. The second network device may further include a memory. The memory is configured to couple to the processor, and the memory stores a program instruction and data that are necessary for the second network device.

According to a seventh aspect, an embodiment of this application provides a computer storage medium, configured to store a computer software instruction used by the foregoing terminal device. The computer software instruction includes a program designed for performing the first aspect.

According to an eighth aspect, an embodiment of this application provides a computer storage medium, configured to store a computer software instruction used by the foregoing first network device. The computer software instruction includes a program designed for performing the second aspect.

According to a ninth aspect, an embodiment of this application provides a computer storage medium, configured to store a computer software instruction used by the foregoing second network device. The computer software instruction includes a program designed for performing the third aspect.

According to a tenth aspect, an embodiment of this application provides a communications system, including the terminal device and the first network device that are described in any one of the foregoing aspects or the possible implementations.

With reference to the tenth aspect, in a possible implementation, the communications system may further include the second network device described in any one of the foregoing aspects or the possible implementations.

According to an eleventh aspect, an embodiment of this application provides another communications system, including the terminal device and the second network device that are described in any one of the foregoing aspects or the possible implementations.

The solutions provided in the fourth aspect to the eleventh aspect are used to implement the method for sending a request of service provided in the first aspect, the second aspect, or the third aspect, and therefore can achieve same beneficial effects as the first aspect, the second aspect, or the third aspect. Details are not described herein again.

### BRIEF DESCRIPTION OF DRAWINGS

FIG. 1 is a schematic diagram of a communications system architecture according to the prior art;
FIG. 2 is a schematic structural diagram of a terminal device according to an embodiment of this application;
FIG. 3 is a schematic structural diagram of a first network device according to an embodiment of this application;
FIG. 4 is a schematic structural diagram of a second network device according to an embodiment of this application;
FIG. 5 is a schematic flowchart of a method for sending a request of service according to an embodiment of this application;
FIG. 6A and FIG. 6B are a schematic flowchart of another method for sending a request of service according to an embodiment of this application;
FIG. 7 is a schematic structural diagram of an apparatus for sending a request of service according to an embodiment of this application;
FIG. 8 is a schematic structural diagram of another apparatus for sending a request of service according to an embodiment of this application;
FIG. 9 is a schematic structural diagram of still another apparatus for sending a request of service according to an embodiment of this application;
FIG. 10 is a schematic structural diagram of yet another apparatus for sending a request of service according to an embodiment of this application;
FIG. 11 is a schematic structural diagram of yet another apparatus for sending a request of service according to an embodiment of this application;
FIG. 12 is a schematic structural diagram of yet another apparatus for sending a request of service according to an embodiment of this application; and
FIG. 13 is a schematic structural diagram of yet another apparatus for sending a request of service according to an embodiment of this application.

### DESCRIPTION OF EMBODIMENTS

Based on this, this application provides a method for sending a new service transmission request, to control a terminal device in a connected mode to initiate a service. A basic principle of the method is as follows: When the terminal device initiates a service in the connected mode based on an indication of first access control information, if the first access control information indicates that access of the service is barred, the terminal device stops initiating the service. Therefore, provided that the first access control information is configured based on a requirement, initiating a service by the terminal in the connected mode can be controlled, thereby controlling load of a network side and ensuring network quality of service.

The terminal device described in this application may be a part or all of a mobile communications device used by a user. For example, the terminal device may be UE or another device. The mobile communications device may be a mobile phone, a tablet computer, a notebook computer, an ultra-mobile personal computer (Ultra-mobile Personal Computer, UMPC), a netbook, a personal digital assistant (Personal Digital Assistant, PDA), an e-book, a mobile television, a wearable device, a personal computer (Personal Computer, PC), or the like. In communications systems of different standards, a terminal device may have different names. A type of the terminal device is not specifically limited in embodiments of this application.

The first network device described in this application may be a part or all of a base station. When the first network device is a part of a base station, the first network device may be a function unit or at least one chip in the base station. The base station is a network side device in a wireless communications system and provides a communication service for the terminal device. In wireless communications systems of different standards, a base station may have different names, but the base station with different names may be understood as the base station described in this application. A type of the base station is not specifically limited in the embodiments of this application. For example, a base station in universal mobile telecommunications system (Universal Mobile Telecommunications System, UMTS) is referred to as a base station (Base Station, BS), a base station in an LTE system is referred to as an eNB, and so on. Examples are not listed one by one herein. All network side devices that provide communication services for terminal devices in a wireless communications system may be understood as the base station described in this application.

A second network device described in this application may be a part or all of a mobility management network element. When the second network device is a part of a mobility management network element, the second network device may be a function unit or at least one chip in the mobility management network element. The mobility management network element is a network element responsible for mobility management in a network. In communications systems of different standards, a mobility management network element may have different names, but the mobility management network element with different names may be understood as the mobility management network element described in this application. A type of the mobility management network element is not specifically limited in this embodiment of this application. For example, the mobility management network element may be an MME in a 4G network, or the mobility management network element may be an AMF entity in a 5G network.

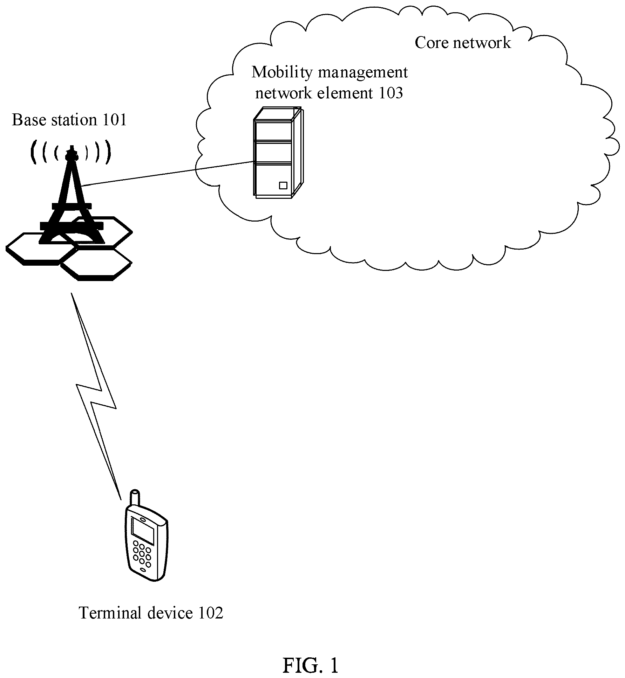

The method for sending a request of service provided in this application is applied to a communications system architecture shown in FIG. 1. As shown in FIG. 1, the communications system architecture includes a base station 101, a terminal device 102, and a mobility management network element 103. The terminal device 102 communicates with the base station 101, and accesses a core network to which the mobility management network element 103 belongs.

It should be noted that FIG. 1 merely shows an example of the communications system architecture. Quantities and types of the base station 101, the terminal device 102, and the mobility management network element 103 that are included in the communications system architecture may be configured based on an actual requirement. FIG. 1 does not specifically limit the content. For clarity of description, the base station 101 shown in FIG. 1 represents the first network device described in this application, and the mobility management network element 103 shown in FIG. 1 represents the second network device described in this application. The base station 101 and the first network device may be directly interchangeably used, and the mobility management network element 103 and the second network device may be directly interchangeably used. Details are not described herein again.

The wireless communications system architecture shown in FIG. 1 may be an LTE network, a UMTS network, or another network. A type of a network to which the solutions of this application are applied is not specifically limited in the embodiments of this application.

Before the embodiments of this application are described, nouns used in the embodiments of this application are explained herein.

Access control information is information used to control access of a service of a terminal device, and whether the access of the service is barred may be determined based on content of the access control information. In this application, execution bodies for determining the first access control information and the second access control information are different.

The first access control information is information received by the terminal device from a network device, and is used to indicate whether access of a service is barred.

The second access control information is information exchanged between network devices, and is used to determine the first access control information.

An access control strategy is a preset rule used to control access, and is, for example, a well-known access control strategy existing in a current communications system. For example, the access control strategy may be an ACB strategy, an SSAC strategy, an ACB skip strategy, an EAB strategy, or an ACDC strategy in data communication.

In the specification and claims in the embodiments of this application, the terms "first", "second", and so on are intended to distinguish between different objects but do not describe a particular order of the objects. For example, the first network device, the second network device, and the like are used to distinguish between different network devices, but are not used to describe a specific sequence of the devices.

In the embodiments of this application, the word "for instance" or "for example" is used to represent giving an example, an illustration, or a description. Any embodiment or design scheme described by using "for instance" or "for example" in the embodiments of this application should not be explained as being more better or having more advantages than another embodiment or design scheme. Exactly, use of the word "for instance", "for example", or the like is intended to present a relative concept in a specific manner for ease of understanding.

The following describes in detail the embodiments of this application with reference to the accompanying drawings.

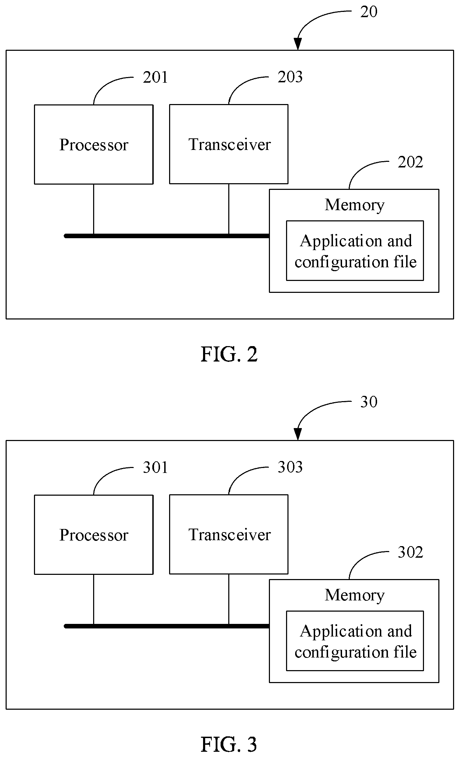

According to an aspect, an embodiment of this application provides a terminal device. FIG. 2 shows a terminal device 20 related to the embodiments of this application. The terminal device 20 may be the terminal device 102 in the communications system architecture shown in FIG. 1. As shown in FIG. 2, the terminal device 20 may include a processor 201, a memory 202, and a transceiver 203.

The following describes each component of the terminal device 20 in detail with reference to FIG. 2.

The memory 202 may be a volatile memory (volatile memory), for example, a random-access memory (random-access memory, RAM), a non-volatile memory (non-volatile memory) such as a read-only memory (read-only memory, ROM), a flash memory (flash memory), a hard disk drive (hard disk drive, HDD), or a solid-state drive (solid-state drive, SSD), or a combination of the foregoing types of memories. The memory 202 is configured to store program code and a configuration file that can implement the methods in this application.

The processor 201 is a control center of the terminal device 20, and may be a central processing unit (central processing unit, CPU), may be an application-specific integrated circuit (Application-Specific Integrated Circuit, ASIC), or may be configured as one or more integrated circuits for implementing the embodiments of this application, for example, one or more microprocessors (digital signal processor, DSP) or one or more field programmable gate arrays (Field Programmable Gate Array, FPGA). The processor 201 may run or execute software programs and/or modules stored in the memory 202 and invoke data stored in the memory 202, to perform various functions of the terminal device 20.

The transceiver 203 is used by the terminal device 20 to interact with another unit. For example, the transceiver 203 may be a transceiver antenna or a transceiver function unit of the terminal device 20.

Specifically, the processor 201 runs or executes the software programs and/or the modules stored in the memory 202, and invokes the data stored in the memory 202, to perform the following functions:
receiving, by the transceiver 203, first access control information from a first network device; and in a connected mode, if the first access control information indicates that access of a first service is barred, stopping, by the terminal device, sending a request of service of the first service to the first network device.

According to another aspect, an embodiment of this application provides a first network device. FIG. 3 shows a first network device 30 related to the embodiments of this application. The first network device 30 may be the first network device 101 in the communications system architecture shown in FIG. 1. As shown in FIG. 3, the first network device 30 may include a processor 301, a memory 302, and a transceiver 303.

The following describes each component of the first network device 30 in detail with reference to FIG. 3.

The memory 302 may be a volatile memory, for example, a RAM, a non-volatile memory such as a ROM, a flash memory, an HDD, or an SSD, or a combination of the foregoing types of memories. The memory 302 is configured to store program code and a configuration file that can implement the methods in this application.

As a control center of the first network device 30, the processor 301 may be a CPU or an ASIC, or may be configured as one or more integrated circuits for implementing the embodiments of this application, for example, one or more DSPs or one or more FPGAs. The processor 301 may run or execute software programs and/or modules stored in the memory 302 and invoke data stored in the memory 302, to perform various functions of the first network device 30.

The transceiver 303 is used by the first network device 30 to interact with another unit. For example, the transceiver 303 may be a transceiver antenna, a transceiver circuit, or a transceiver apparatus of the first network device 30.

Specifically, the processor 301 runs or executes the software programs and/or the module stored in the memory 302, and invokes the data stored in the memory 302, to perform the following functions:
determining first access control information, where the first access control message is used to control a request of service of a terminal device in a connected mode; and sending the first access control information by using the transceiver 303.

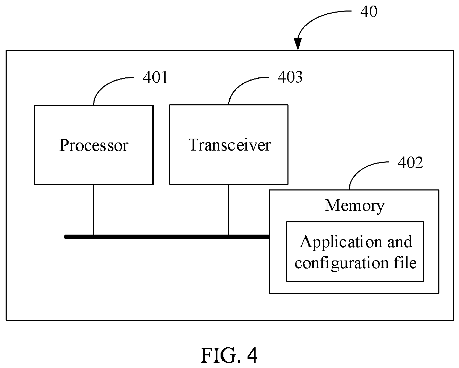

According to another aspect, an embodiment of this application provides a second network device. FIG. 4 shows a second network device 40 related to the embodiments of this application. The first network device 40 may be the second network device 103 in the communications system architecture shown in FIG. 1. As shown in FIG. 4, the second network device 40 may include a processor 401, a memory 402, and a transceiver 403.

The following describes each component of the second network device 40 in detail with reference to FIG. 4.

The memory 402 may be a volatile memory, for example, a RAM, a non-volatile memory such as a ROM, a flash memory, an HDD, or an SSD, or a combination of the foregoing types of memories. The memory 402 is configured to store program code and a configuration file that can implement the methods in this application.

As a control center of the second network device 40, the processor 401 may be a CPU or an ASIC, or may be configured as one or more integrated circuits for implementing the embodiments of this application, for example, one or more DSPs or one or more FPGAs. The processor 401 may run or execute software programs and/or modules stored in the memory 402 and invoke data stored in the memory 402, to perform various functions of the second network device 40.

The transceiver 403 is used by the second network device 40 to interact with another unit. For example, the transceiver 403 may be a transceiver antenna, a transceiver circuit, or a transceiver apparatus of the second network device 40.

Specifically, the processor 401 runs or executes the software programs and/or the modules stored in the memory 402, and invokes the data stored in the memory 402, to perform the following functions:
determining second access control information, where the second access control information is used to control a request of service of a terminal device in a connected mode; and sending the second access control information to a first network device or the terminal device by using the transceiver 403.

According to still another aspect, an embodiment of this application provides a method for sending a request of service, applied to a process of interaction between a terminal device and a first network device. The method for sending a request of service provided in this embodiment of this application may be performed by the terminal device and/or the first network device, or may be performed by a function unit or a chip in the terminal device and/or the first network device. This is not specifically limited in this embodiment of this application. Performing an action by the terminal device and/or the first network device described in the following embodiments may be replaced with performing the action by the function unit or the chip in the terminal device and/or the first network device. Details are not described again. The function unit or the chip that is in the terminal device and/or the first network device and that performs the method for sending a request of service provided in this application may be referred to as an apparatus for sending a request of service.

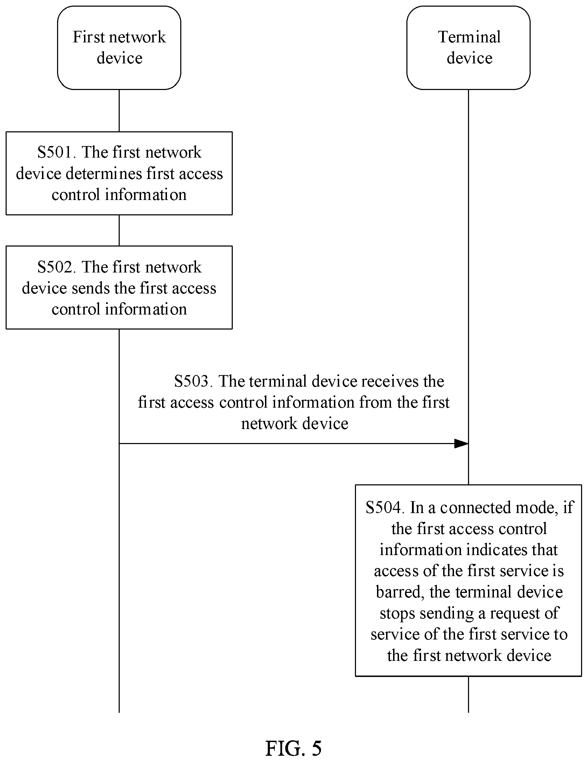

As shown in FIG. 5, a method for sending a request of service provided in an embodiment of this application may include the following steps.

S501. A first network device determines first access control information.

The first access control message is used to control a request of service of a terminal device in a connected mode.

Optionally, the first network device may be a part or all of a base station. When the first network device is a part of a base station, the first network device may be a function unit or at least one chip in the base station. The base station is an access network device in a wireless network, and is responsible for connecting the terminal device to a core network, to implement communication between the terminal device and the core network. For example, the base station may be an eNB in a 4G network, or the base station may be a gNB in a 5G network. A type of the base station is not limited in this application. There may be different types of base stations in different types of networks.

The first access control information is used to control access of a service of the terminal device in the connected mode, and content of the first access control information indicates which services of the terminal device in the connected mode are barred by a network side and which services are allowed by the network side. It should be noted that, being barred or allowed by the network side may be being barred or allowed by the first network device, or may be being barred or allowed by another network device. This is not specifically limited in this embodiment of this application. The barring described herein refers to barring the terminal device in the connected mode from initiating some services, that is, barring some services of the terminal device from accessing a network. For example, if the first access control information indicates that a service A of the terminal device in the connected mode is barred from accessing the network, when initiating a request of service of the service A, the terminal device considers, based on the indication of the first access control information, that the request of service of the service A is barred, that is, skips sending the request of service of the service A to a network device. Similarly, the allowing described herein means allowing the terminal device in the connected mode to initiate some services, that is, allowing some services of the terminal device to access a network. For example, if the first access control information indicates that a service B of the terminal device in the connected mode is allowed to access the network, when sending a request of service of the service B, the terminal device considers, based on the indication of the first access control information, that the request of service of the service B is allowed, that is, sends the request of service of the service B to a network device. In this specification, "not barred" and "allowed" have a same meaning, and "barred" and "not allowed" have a same meaning. In this specification, unless otherwise specified, the terminal device is in the connected mode.

Optionally, the first access control information may include at least one of the following information: enabling indication information, a type of a service allowed to be initiated, a type of a service barred from being initiated, a type of a terminal device allowed to initiate a service, a type of a terminal device barred from initiating a service, or indication information for enabling an access control strategy.

The enabling indication information is used to indicate whether the terminal device needs to determine, based on the first access control information, whether access of a first service is barred, that is, to enable or disable a mechanism that can control the terminal device in the connected mode to send the request of service. For example, when the enabling indication information indicates to enable the mechanism, the terminal device determines, based on access control information sent by the network device, whether a request of service sent by the terminal device is barred; or when the enabling indication information indicates to disable the mechanism, the terminal device does not need to determine, based on access control information, whether a request of service sent by the terminal device is barred, but directly sends the request of service according to the prior art. Further, the enabling indication information may be explicit indication information. For example, when ConnectionAccessEnable is True or Enable, it indicates enabling. ConnectionAccessEnable may be explained as connected-mode access enabling indication information, namely, the foregoing enabling indication information. When ConnectionAccessEnable is False or Disable, it indicates disabling. Alternatively, the enabling indication information may be implicit indication information. For example, when the network device sends information related to connected-mode access control, it indicates that the foregoing connected-mode access control mechanism is enabled. If the network device does not send information related to connected-mode access control, it indicates that the foregoing connected-mode access control mechanism is disabled. It should be noted that possible content of the first access control information is merely listed herein, and content of the first access control information is not specifically limited. During actual application, the content of the first access control information may be configured based on an actual requirement.

The type of the service allowed to be initiated refers to a service type of a service that the network device allows the terminal device in the connected mode to initiate. For example, the type of the service allowed to be initiated may include one or a combination of the following: a mobile terminated service (Mobile terminating call), an emergency call service (Emergency call), a mobile originated service (Mobile originating call), a signaling service (Signaling), circuit-switched fallback (CS fallback), a multimedia telephony service (Multi-Media Telephony, MMTEL), a voice service (Voice), a video service (Video), a short message service (Short Message Service, SMS), a delay tolerance service (Delay tolerance service), and the like. It should be noted that the foregoing examples of the type of the service allowed to be initiated do not constitute a limitation.

The type of the service barred from being initiated refers to a service type of a service that the network device bars the terminal device in the connected mode from initiating. For example, the type of the service barred from being initiated may include one or a combination of the following: a mobile terminated service (Mobile terminating call), an emergency call service (Emergency call), a mobile originated service (Mobile originating call), a signaling service (Signaling), circuit-switched fallback (CS fallback), a multimedia telephony service (Multi-Media Telephony, MMTEL), a voice service (Voice), a video service (Video), a short message service (Short Message Service, SMS), a delay tolerance service (Delay tolerance service), and the like. It should be noted that the foregoing examples of the type of the service barred from being initiated do not constitute a limitation.

For example, the type of the terminal device allowed to initiate a service may be a machine type communication (Machine Type Communication, MTC) terminal device, a narrowband internet of things (Narrow Band Internet of Thing, NB-IoT) terminal device, a water meter, an electricity meter, a wearable device, or the like. It should be noted that the foregoing examples of the type of the terminal device allowed to initiate a service do not constitute a limitation.

For example, the type of the terminal device barred from initiating a service may be a machine type communication (Machine Type Communication, MTC) terminal device, a narrowband internet of things (Narrow Band Internet of Thing, NB-IoT) terminal device, a water meter, an electricity meter, a wearable device, or the like. It should be noted that the foregoing examples of the type of the terminal device barred from initiating a service do not constitute a limitation.

The indication information for enabling an access control strategy indicates that the network device indicates the terminal device to determine, based on a specified access control strategy, whether the terminal device in the connected mode can initiate a service. The access control strategy is an access control criterion preconfigured or defined in 3GPP TS 36.331.

For example, the access control strategy may include at least one of the following: an ACB strategy, an SSAC strategy, an ACB skip strategy, an EAB strategy, or an ACDC strategy in data communication.

Certainly, during actual application, content of the access control strategy may be configured based on an actual requirement. An example is merely used herein for describing the content of the access control strategy, but the content is not specifically limited thereto.

The ACB strategy is an access control strategy proposed in 3GPP Release 8. The terminal device performs access control based on an access type by using a random number and a timer.

The SSAC strategy (Scheme/Mechanism) is an access control strategy proposed in 3GPP Release 9. In this strategy, a network broadcasts an access barring factor and a random timer. An actual decision is made at an IMS layer of UE. The SSAC strategy can be used in the connected mode and an idle mode, and is used to resolve a network overload problem caused by simultaneous access of a large quantity of terminal devices.

The ACB skip strategy is a method introduced in 3GPP Release 12 to control IMS voice users and video users to skip the ACB strategy.

The EAB strategy is an access control strategy proposed in 3GPP Release 11. In this strategy, a network is allowed to bar low-priority UE. This method is based on a bitmap. Each class from 0 to 9 can be barred or allowed.

The ACDC strategy in data communication is an access control strategy proposed in 3GPP Release 13. In this strategy, it is allowed to bar a service of a specific application. Applications are classified based on global application identifiers, and a network broadcasts a barring parameter (a barring factor and a timer) for each type of application.

For example, the indication information for enabling an access control strategy is AccessControlStrategy. In one method, the indication information indicates only one strategy, that is, the strategy is defined through enumeration. For example, AccessControlStrategy is ENUMERATED{ACB, SSAC, ACBskip, EAB, ACDC, ...}. When a value of AccessControlStratey is ACB, the terminal device checks, based on the indication information by using the ACB strategy in the prior art, a request of service to be sent by the terminal device in the connected mode, and checks whether the request of service complies with access control of the ACB strategy. If a check result is that access is allowed, the terminal device sends the request of service; otherwise, the terminal device skips sending the request of service. In another method, the network device indicates one or more strategies, which may be defined by using AccessControlStrategyList. AccessControlStrategyList is defined by using SEQUENCE(SIZE(0 ... maxValue)) OF AccessControlStrategy. maxValue is a maximum quantity of strategies allowed by a network, and a definition of AccessControlStrategy is the same as that in the previous method. Alternatively, the network device indicates one or more strategies, which may be defined by using a bitmap (Bitmap). For example, assuming that there are a total of five strategies: ACB, SSAC, ACBskip, EAB, and ACDC, a bitmap AccessControlStrategyBitmap may be defined as a bit string (5). That is, there are a total of five bits, and the bits sequentially represent the foregoing five strategies. A bit of "1" indicates to enable the strategy, and in this case, the terminal device needs to check, according to the strategy, whether a request of service is allowed to be sent. A bit of "0" indicates to disable the strategy, and in this case, the terminal device does not need to check, according to the strategy, whether a service is allowed to be initiated. Meanings of 1 and 0 are interchangeable. For example, if AccessControlStrategyBitmap is 00110, it indicates to enable the ACBskip and EAB strategies and disable other strategies.

Optionally, in S501, the first network device may periodically determine the first access control information, or may determine the first access control information when a load status of the first network device meets a preset condition. An occasion for performing S501 is not specifically limited in this embodiment of this application, and may be configured based on an actual requirement.

When the first access control information is periodically determined, a specific interval of periods may be configured based on an actual requirement. Content of the preset condition may also be configured based on an actual requirement. This is not specifically limited in this embodiment of this application.

Optionally, S501 of determining, by a first network device, first access control information may be implemented by using any one of the following solutions:
Solution 1: The first network device determines the first access control information based on the load status of the first network device.

Optionally, in Solution 1, a preset correspondence between the load status and the content of the first access control information may be preconfigured. During performing of S501, the preset correspondence may be queried. Content of the preset correspondence may be configured based on actual experience. A configuration process is not limited in this application.

For example, Table 1 describes the content of the preset correspondence as an example. As shown in Table 1, it is assumed that when the first network device performs S501, the load status is 15%. In this case, during determining of the content of the first access control information, if the first access control information includes, for example, the type of the service barred from being initiated, the type of the service barred from being initiated may be a type-A service or a type-B service.

**Table 1**

| Load status X | First access control information (type of a service barred from being initiated) |
|---|---|
| X≤10% | Null |
| 10%<X≤20% | Type-A service |
| 20%<X≤30% | Type-A service and type-B service |
| ... | ... |

It should be noted that Table 1 is merely an example description of the preset correspondence, and does not limit the content and a form of the preset correspondence.

Optionally, in Solution 1, a model about the load status and the first access control information may be established in advance through learning. During performing of S501, the load status is input into the model to obtain the first access control information.

It should be noted that another manner may be used in the process of determining the first access control information based on the load status. This is not specifically limited in this embodiment of this application.

Solution 2: The first network device receives second access control information sent by a second network device, and determines the first access control information based on the second access control information. The second access control information is determined by the second network device based on the load status of the first network device.

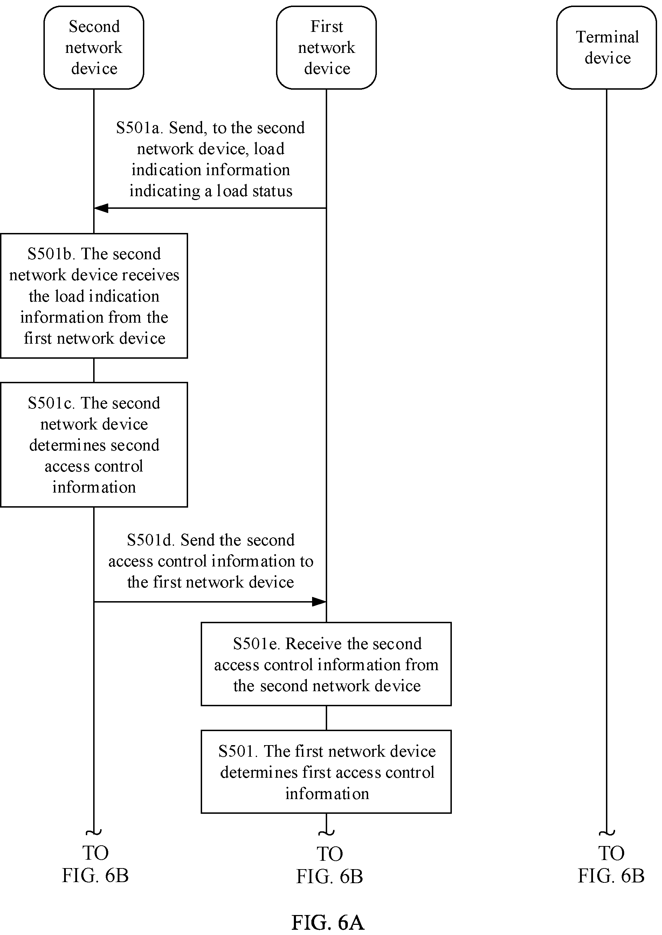

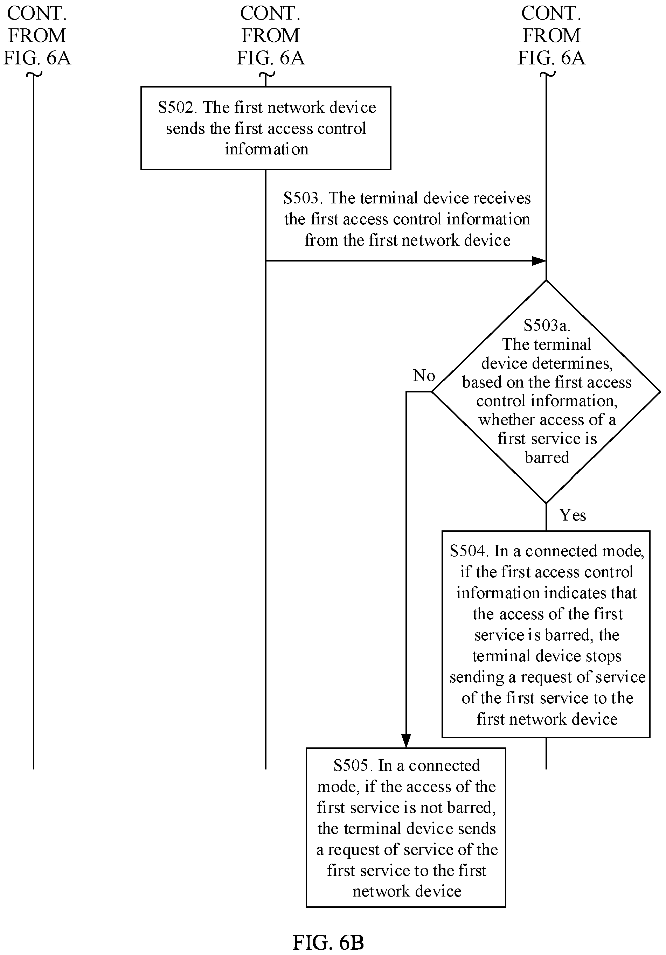

Optionally, in Solution 2, as shown in FIG. 6, before S501, the method for sending a request of service provided in this embodiment of this application may further include S501a to S501e.

S501a. The first network device sends, to the second network device, load indication information indicating the load status.

The load indication information is used to indicate the load status of the first network device, and the load indication information may be in any form such as a character string or code. This is not specifically limited in this embodiment of this application. It should be noted that a correspondence between the load indication information and the load status may be configured based on an actual requirement. This is not specifically limited in this embodiment of this application.

For example, the load indication information may be represented by using a binary character string, and the correspondence between the load indication information and the load status may be represented in a form of a correspondence. During performing of S501a, the correspondence is queried to obtain the load indication information, and the load indication information is sent.

S501b. The second network device receives the load indication information from the first network device.

S501c. The second network device determines the second access control information.

The second network device determines the second access control information based on the load indication information received in S501b.

In a possible implementation, the second network device may directly determine the second access control information based on the load indication information. For an implementation in which the second network device determines the second access control information based on the load indication information, refer to the implementation in Solution 1 in which the first network device determines the first access control information based on the load status. Details are not described herein again.

In another possible implementation, the second network device determines the load status based on the load indication information, and then determines the second access control information based on the load status. For an implementation in which the second network device determines the second access control information based on the load status, refer to the implementation in Solution 1 in which the first network device determines the first access control information based on the load status. Details are not described herein again.

It should be noted that content of the second access control information may be the same as the content of the first access control information, or content of the second access control information may correspond to the content of the first access control information. This is not specifically limited in this embodiment of this application.

S501d. The second network device sends the second access control information to the first network device.

The second network device transmits the second access control information through a communications interface between the second network device and the first network device.

S501e. The first network device receives the second access control information from the second network device.

Solution 3: The first network device receives second access control information sent by a second network device, and determines the first access control information based on the second access control information. The second access control information is determined based on a load status of the second network device.

Specifically, Solution 3 can be implemented by replacing S501a to S5-1e in Solution 2 with S501c, S502d, and S501e.

In an implementation, the second network device determines the second access control information based on the load status of the second network device. The second access control information may be explicit information similar to the first access control information, or the second access control information is used to indicate the load status of the second network device, and the first network device determines the first access control information based on the load status of the second network device indicated by the second access control information.

It should be noted that in this specification, "based on A" in "determining B based on A" by all network devices is optional content, that is, the network device may perform determining based on other information.

In Solution 2 or Solution 3, specific implementations of S501 may include but are not limited to the following implementation 1 and implementation 2.

Implementation 1: The second access control information is the same as the first access control information, and the first network device can determine the first access control information after receiving the second access control information. In Implementation 1, the first network device receives the second access control information determined by the second network device, and directly obtains the first access control information. In this case, the second access control information may be directly sent to the terminal device by using the first network device, that is, the second access control information is encapsulated into the first access control information and sent to the terminal device.

Implementation 2: The second access control information corresponds to the first access control information, and after receiving the second access control information, the first network device determines the first access control information based on the correspondence. For example, the first network device determines the first access control information based on the second access control information and a communication protocol between the first network device and the terminal device. In this case, the first access control information and the second access control information differ only in a data transmission format, and have a same substantive meaning. In other words, the first network device re-encapsulates the second access control information into the first access control information, and sends the first access control information to the terminal device.

It should be noted that, as described in S501, the first access control information is determined based on the load status of the first network device. In actual application, the first access control information may be determined based on a load status of another network device. A specific implementation is the same as the foregoing description, and details are not described herein again.

S502. The first network device sends the first access control information.

Specifically, S502 of sending, by the first network device, the first access control information may be, but not limited to being, implemented in the following two manners:

Implementation 1: A system message (system information) is used, where the system message includes the first access control information.

Optionally, the system message may include a SIB1 message and a SIB2 message. Alternatively, the system message may be a message specially used to send the first access control information. A type of the system message is not specifically limited in this application.

Implementation 2: Dedicated signaling (Dedicated signaling) is used, where the dedicated signaling includes the first access control information.

Optionally, the dedicated signaling may include an RRC connection reconfiguration message. Alternatively, the dedicated signaling may be a message specially used to send the first access control information. A type of the dedicated signaling is not specifically limited in this application.

S503. The terminal device receives the first access control information from the first network device.

Corresponding to the two implementations in S502, S503 of receiving, by the terminal device, the first access control information from the first network device may be, but not limited to being, implemented in the following two implementations:

Implementation A: The terminal device receives a system message from the first network device, where the system message includes the first access control information.

Implementation B: The terminal device receives dedicated signaling from the first network device, where the dedicated signaling includes the first access control information.

It should be noted that, when the terminal device receives the first access control information in S503, the terminal device may be in the idle (IDLE) mode, or may be in the connected mode.

Specifically, inside the terminal device, the terminal device may include an AS stratum and a NAS stratum. S503 of receiving, by the terminal device, the first access control information from the first network device is specifically implemented as: receiving, by the AS stratum, the first access control information from the first network device. The AS stratum receives information or a message from another device or sends information or a message to another device, and the NAS stratum receives information or a message from another device by using the AS stratum or sends information or a message to another device b using the AS stratum.

Further, optionally, as shown in FIG. 6, after S503, the method for sending a request of service provided in this embodiment of this application may further include S503a.

S503a. The terminal device determines, based on the first access control information, whether the access of the first service is barred.

Optionally, the terminal device may perform S503a when receiving the first access control information in S503, or may perform S503a when initiating the first service in the connected mode. This is not specifically limited in this embodiment of this application. As described above, the terminal device may receive the first access control information in the idle mode or the connected mode. In this case, the terminal device may determine, in the idle mode or the connected mode based on the first access control information, whether the access of the first service is barred.

Further, when the terminal device includes an AS stratum and a NAS stratum, there may be a plurality of specific implementations of S503a, which are described one by one in the following.

In a possible implementation, in S503, the AS stratum receives the first access control information from the first network device, and the AS stratum sends the first access control information to the NAS stratum; and the NAS stratum determines, based on the first access control information, whether the access of the first service is barred. The first service is any service initiated by the terminal device, and does not refer to a specific service.

In another possible implementation, in S503, the AS stratum receives the first access control information from the first network device, the AS stratum extracts first indication information from the first access control information, and the AS stratum sends the first indication information to the NAS stratum; and the NAS stratum determines, based on the first indication information, whether the access of the first service is barred, where the first indication information includes information related to access control.

In another possible implementation, in S503, the AS stratum receives the first access control information from the first network device and stores the first access control information; and the NAS stratum in the connected mode sends service request signaling of the first service to the AS stratum, and the AS stratum determines, based on the first access control information and the service request signaling of the first service, whether the access of the first service is barred.

The request of service may include a PDN connection request, a bearer resource modification request, or a service request. Certainly, a type of the request of service is not specifically limited in this application.

For example, the service request may be a service request for browsing a web page, a service request for making a call, or another service request. Details are not described in this application.

In another possible implementation, in S503, the AS stratum receives the first access control information from the first network device and stores the first access control information; and the NAS stratum in the connected mode sends service request signaling of the first service and access control strategy indication information to the AS stratum, where the AS stratum determines, with reference to an access control strategy indicated by the access control strategy indication information and based on the first access control information and the request signaling of the first service, whether the access of the first service is barred. The access control strategy indicated by the access control strategy indication information is an access control strategy configured inside the terminal device. The access control strategy combined with the first access control information is used to control access of a service initiated by the terminal device. The access control strategy indicated by the access control strategy indication information described herein is the same as the access control strategy described above. The access control strategy has been described in detail above, and details are not described herein again.

For example, if the NAS stratum in the connected mode sends signaling of an MO request of service and ACB strategy indication information to the AS stratum, the AS stratum checks, for the MO request of service, whether the ACB strategy allows initiation of the MO request of service.

In a possible implementation, the determining, by the AS stratum based on the first access control information and the service request signaling of the first service, whether the access of the first service is barred may specifically include: parsing, by the AS stratum, the service request signaling of the first service to obtain a service type of the first service; and determining, by the AS stratum based on the first access control information and the service type of the first service, whether the access of the first service is barred.

In another possible implementation, when sending the service request signaling of the first service to the AS stratum, the NAS stratum in the connected mode further sends the service type of the first service to the AS stratum. The determining, by the AS stratum based on the first access control information and the service request signaling of the first service, whether the access of the first service is barred includes: determining, by the AS stratum based on the first access control information and the service type of the first service, whether the access of the first service is barred.

It should be noted that because the first access control information indicates specific services whose access is barred or specific services whose access is not barred, a process of determining whether the access of the first service is barred is a comparison process. Details are not described herein again.

S504. In the connected mode, if the first access control information indicates that the access of the first service is barred, the terminal device stops sending the request of service of the first service to the first network device.

Further, when the terminal device includes an AS stratum and a NAS stratum, there may be a plurality of specific implementations of S504, which are described one by one in the following.

In a possible implementation, that the NAS stratum determines, based on the first access control information, that the access of the first service is barred in the connected mode, and the terminal device stops sending the request of service of the first service to the first network device may be specifically implemented as follows: The NAS stratum stops sending the service request signaling of the first service to the AS stratum.

In another possible implementation, that the NAS stratum in the connected mode sends service request signaling of the first service to the AS stratum, the AS stratum determines, based on the first access control information, that the access of the first service is barred in the connected mode, and the terminal device stops sending the request of service of the first service to the first network device may be specifically implemented as follows: The AS stratum stops sending the service request signaling of the first service to the first network device.

Optionally, in another possible implementation, when the AS stratum determines that the access of the first service is barred, the method for sending a request of service provided in this application may further include: sending, by the AS stratum, response information to the NAS stratum, where the response information indicates that the access of the first service is barred.

Optionally, in another possible implementation, the method for sending a request of service provided in this application may further include: when sending the response information to the NAS stratum, sending, by the AS stratum to the NAS stratum, a cause why the access of the first service is barred, where the cause may be that a check result of a strategy such as ACB or ACDC is barring.

According to the method for sending a request of service provided in this application, based on the indication of the first access control information received from the first network device, the access of the first service is barred, and the terminal device in the connected mode stops sending the request of service of the first service to the first network device, so that access of a service of the terminal device in the connected mode is controlled, and load of the first network device is controlled, thereby preventing overload from affecting network quality of service.

Further, as shown in FIG. 6, after S503a, the method for sending a request of service provided in this application may further include S505.

S505. In the connected mode, if the access of the first service is not barred, the terminal device sends the request of service of the first service to the first network device.

Further, when the terminal device includes an AS stratum and a NAS stratum, there may be a plurality of specific implementations of S505, which are described one by one in the following.

In a possible implementation, that the NAS stratum determines, based on the first access control information, that the access of the first service is not barred in the connected mode, and the terminal device sends the request of service of the first service to the first network device may be specifically implemented as follows: The NAS stratum sends the service request signaling of the first service to the AS stratum, and the AS stratum sends the service request signaling of the first service to the first network device.

In another possible implementation, that the NAS stratum in the connected mode sends service request signaling of the first service to the AS stratum, the AS stratum determines, based on the first access control information, that the access of the first service is not barred in the connected mode, and the terminal device sends the request of service of the first service to the first network device may be specifically implemented as follows: The AS stratum sends the service request signaling of the first service to the first network device.

The foregoing mainly describes the solutions provided in the embodiments of this application from perspectives of working processes of the terminal device and the first network device. It may be understood that to implement the foregoing functions, the terminal device and the first network device each include corresponding hardware structures and/or software modules for performing each function. Persons skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

It should be noted that a function part that is of the terminal device or the first network device and that performs the method for sending a request of service provided in this application is referred to as an apparatus for sending a request of service. It may be understood that the apparatus for sending a request of service may be a part or all of the terminal device or the first network device. In other words, the apparatus for sending a request of service may be equivalent to the terminal device or the first network device, or the apparatus for sending a request of service may be deployed in the terminal device or the first network device, to support the terminal device or the first network in performing the method for sending a request of service provided in this application.

In the embodiments of this application, the terminal device and the first network device may be divided into function modules according to the foregoing method examples. For example, each function module may be obtained through division corresponding to each function, or two or more functions may be integrated into one processing module. The integrated module may be implemented in a form of hardware, or may be implemented in a form of a software function module. It should be noted that, in the embodiments of this application, module division is for instance, and is merely logical function division. During actual implementation, another division manner may be used. When the apparatus for sending a request of service is a part or all of the terminal device or the first network device, dividing the terminal device or the first network device into function modules is equivalent to dividing the apparatus for sending a request of service into function modules. Alternatively, when the apparatus for sending a request of service is a part or all of the terminal device or the first network device, dividing the apparatus for sending a request of service into function modules is equivalent to dividing the terminal device or the first network device into function modules.

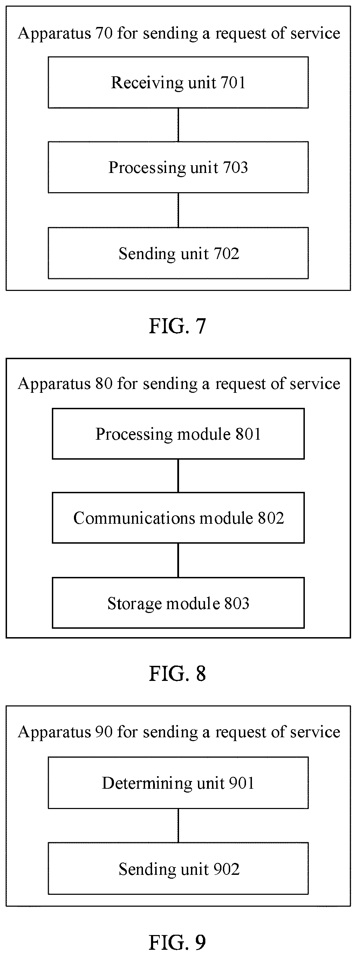

When function modules corresponding to functions are obtained through division, FIG. 7 is a possible schematic structural diagram of an apparatus for sending a request of service in the terminal device in the foregoing embodiments. The apparatus 70 for sending a request of service may include a receiving unit 701, a sending unit 702, and a processing unit 703. The receiving unit 701 is configured to perform the process S503 in FIG. 5 or FIG. 6. The sending unit 702 is configured to send a request of service to a first network device. The processing unit 703 is configured to perform the processes S503a, S504, and S505 in FIG. 5 or FIG. 6. All related content of the steps in the foregoing method embodiments may be cited in function descriptions of corresponding function modules. Details are not described herein again.

When an integrated unit is used, FIG. 8 is a possible schematic structural diagram of an apparatus for sending a request of service in the terminal device in the foregoing embodiments. The apparatus 80 for sending a request of service may include a processing module 801 and a communications module 802. The processing module 801 is configured to control and manage an action of the apparatus 80 for sending a request of service. For example, the processing module 801 is configured to support the apparatus 80 for sending a request of service in performing the processes S503, S503a, S504, and S505 in FIG. 5 or FIG. 6. The apparatus 80 for sending a request of service may further include a storage module 803, configured to store program code and data of the apparatus 80 for sending a request of service.

When the apparatus 80 for sending a request of service is deployed in a terminal device, the processing module 801 may be the processor 201 in the entity structure of the terminal device 20 shown in FIG. 2, or may be a processor or a controller. For example, the processing module may be a CPU, a general purpose processor, a DSP, an ASIC, an FPGA or another programmable logic device, a transistor logic device, a hardware component, or any combination thereof. The processing module may implement or execute various example logical blocks, modules, and circuits described with reference to content disclosed in this application. Alternatively, the processor 801 may be a combination of processors implementing a computing function, for example, a combination of one or more microprocessors, or a combination of a DSP and a microprocessor. The communications module 802 may be the transceiver 203 in the entity structure of the terminal device 20 shown in FIG. 2. The communications module 802 may be a communications port, or may be a transceiver, a transceiver circuit, a communications interface, or the like. Alternatively, the communications interface may communicate with another device by using the foregoing elements that have receiving and sending functions. The foregoing elements that have receiving and sending functions may be implemented by an antenna and/or a radio frequency apparatus. The storage module 803 may be the memory 202 in the entity structure of the terminal device 20 shown in FIG. 1.

When the processing module 801 is a processor, the communications module 802 is a transceiver, and the storage module 803 is a memory, the apparatus 80 for sending a request of service in FIG. 8 in this embodiment of this application may be a part or all of the terminal device 20 shown in FIG. 2.

As described above, the apparatus 70 for sending a request of service or the apparatus 80 for sending a request of service provided in the embodiments of this application may be configured to implement the functions of the terminal device in the methods implemented in the foregoing embodiments of this application. For ease of description, only a part related to the embodiments of this application is shown. For specific technical details not disclosed, refer to the embodiments of this application.

When function modules corresponding to functions are obtained through division, FIG. 9 is a possible schematic structural diagram of a data transmission apparatus in the first network device in the foregoing embodiments. The apparatus 90 for sending a request of service may include a determining unit 901 and a sending unit 902. The determining unit 901 is configured to perform the process S501 in FIG. 5 or FIG. 6. The sending unit 902 is configured to perform the processes S502 and S501a in FIG. 5 or FIG. 6. All related content of the steps in the foregoing method embodiments may be cited in function descriptions of corresponding function modules. Details are not described herein again.

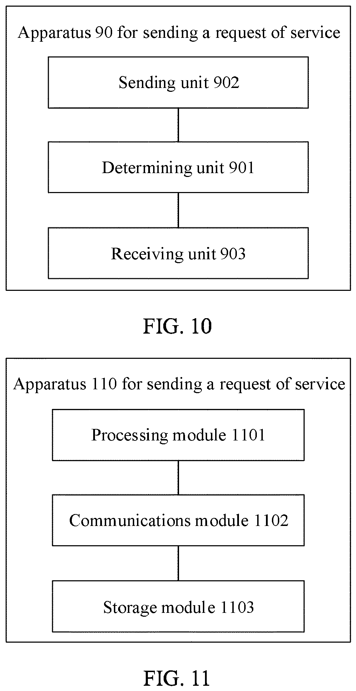

Further, as shown in FIG. 10, the apparatus 90 for sending a request of service may further include a receiving unit 903. The receiving unit 903 is configured to perform the process S501e in FIG. 6.

When an integrated unit is used, FIG. 11 is a possible schematic structural diagram of an apparatus for sending a request of service in the first network device in the foregoing embodiments. The apparatus 110 for sending a request of service may include a processing module 1101 and a communications module 1102. The processing module 1101 is configured to control and manage an action. The communications module 1102 is configured to communicate with another network entity. For example, the processing module 1101 is configured to perform the process S501 in FIG. 5 or FIG. 6. The processing module 1101 is configured to perform the processes S502, S501a, and S501e in FIG. 5 or FIG. 6 by using the communications module 1102. The apparatus 110 for sending a request of service may further include a storage module 1103, configured to store program code and data.

When the apparatus 110 for sending a request of service is deployed in a first network device, the processing module 1101 may be the processor 301 in the entity structure of the first network device 30 shown in FIG. 3, or may be a processor or a controller. For example, the processing module may be a CPU, a general purpose processor, a DSP, an ASIC, an FPGA or another programmable logic device, a transistor logic device, a hardware component, or any combination thereof. The processing module may implement or execute various example logical blocks, modules, and circuits described with reference to content disclosed in this application. Alternatively, the processor 1101 may be a combination of processors implementing a computing function, for example, a combination of one or more microprocessors, or a combination of a DSP and a microprocessor. The communications module 1102 may be the transceiver 303 in the entity structure of the first network device 30 shown in FIG. 3. The communications module 1102 may be a communications port, or may be a transceiver, a transceiver circuit, a communications interface, or the like. Alternatively, the communications interface may communicate with another device by using the foregoing elements that have receiving and sending functions. The foregoing elements that have receiving and sending functions may be implemented by an antenna and/or a radio frequency apparatus. The storage module 1103 may be the memory 302 in the entity structure of the first network device 30 shown in FIG. 3.

When the processing module 1101 is a processor, the communications module 1102 is a transceiver, and the storage module 1103 is a memory, the apparatus 110 for sending a request of service in FIG. 11 in this embodiment of this application may be a part or all of the first network device 30 shown in FIG. 3.

As described above, the apparatus 90 for sending a request of service or the apparatus 110 for sending a request of service provided in the embodiments of this application may be configured to implement the functions of the first network device in the methods implemented in the foregoing embodiments of this application. For ease of description, only a part related to the embodiments of this application is shown. For specific technical details not disclosed, refer to the embodiments of this application.

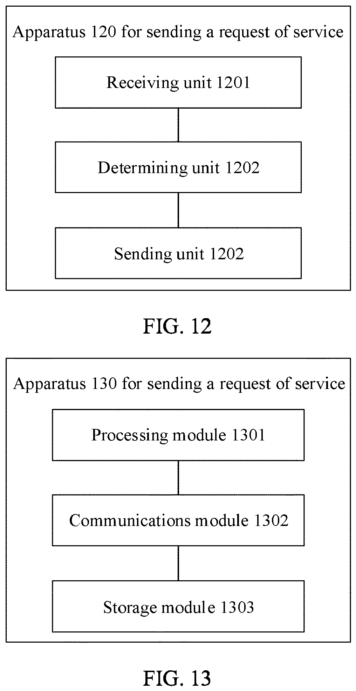

When function modules corresponding to functions are obtained through division, FIG. 12 is a possible schematic structural diagram of a data transmission apparatus in the second network device in the foregoing embodiments. The apparatus 120 for sending a request of service may include a receiving unit 1201, a determining unit 1202, and a sending unit 1203. The receiving unit 1201 is configured to perform the process S501b in FIG. 6. The determining unit 1202 is configured to perform the process S501c in FIG. 6. The sending unit 1203 is configured to perform the process S501d in FIG. 6. All related content of the steps in the foregoing method embodiments may be cited in function descriptions of corresponding function modules. Details are not described herein again.

When an integrated unit is used, FIG. 13 is a possible schematic structural diagram of an apparatus for sending a request of service in the second network device in the foregoing embodiments. The apparatus 130 for sending a request of service may include a processing module 1301 and a communications module 1302. The processing module 1301 is configured to control and manage an action. The communications module 1302 is configured to communicate with another network entity. For example, the processing module 1301 is configured to perform the process S501c in FIG. 6. The processing module 1301 is configured to perform the processes S501b and S501d in FIG. 6 by using the communications module 1302. The apparatus 130 for sending a request of service may further include a storage module 1303, configured to store program code and data.

When the apparatus 130 for sending a request of service is deployed in a second network device, the processing module 1301 may be the processor 401 in the entity structure of the second network device 40 shown in FIG. 4, or may be a processor or a controller. For example, the processing module may be a CPU, a general purpose processor, a DSP, an ASIC, an FPGA or another programmable logic device, a transistor logic device, a hardware component, or any combination thereof. The processing module may implement or execute various example logical blocks, modules, and circuits described with reference to content disclosed in this application. Alternatively, the processor 1301 may be a combination of processors implementing a computing function, for example, a combination of one or more microprocessors, or a combination of a DSP and a microprocessor. The communications module 1302 may be the transceiver 403 in the entity structure of the second network device 40 shown in FIG. 4. The communications module 1302 may be a communications port, or may be a transceiver, a transceiver circuit, a communications interface, or the like. Alternatively, the communications interface may communicate with another device by using the foregoing elements that have receiving and sending functions. The elements that have receiving and sending functions may be implemented by an antenna and/or a radio frequency apparatus. The storage module 1303 may be the memory 402 in the entity structure of the second network device 40 shown in FIG. 4.

When the processing module 1301 is a processor, the communications module 1302 is a transceiver, and the storage module 1303 is a memory, the apparatus 130 for sending a request of service in FIG. 13 in this embodiment of this application may be a part or all of the second network device 40 shown in FIG. 4.

As described above, the apparatus 120 for sending a request of service or the apparatus 130 for sending a request of service provided in the embodiments of this application may be configured to implement the functions of the second network device in the methods implemented in the foregoing embodiments of this application. For ease of description, only a part related to the embodiments of this application is shown. For specific technical details not disclosed, refer to the embodiments of this application.

According to still another aspect, an embodiment of this application provides a communications system, including the terminal device described in any one of the foregoing embodiments and the first network device described in any one of the foregoing embodiments.

According to still another aspect, an embodiment of this application provides a communications system, including the terminal device described in any one of the foregoing embodiments, the first network device described in any one of the foregoing embodiments, and the second network device described in any one of the foregoing embodiments.

Method or algorithm steps described in combination with the content disclosed in this application may be implemented by hardware, or may be implemented by a processor by executing a software instruction. The software instruction may include a corresponding software module. The software module may be stored in a RAM, a flash memory, a ROM, an erasable programmable read only memory (Erasable Programmable ROM, EPROM), an electrically erasable programmable read only memory (Electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components. Alternatively, the memory may be coupled to the processor. For example, the memory may exist independently, and is connected to the processor by using a bus. Alternatively, the memory may be integrated with the processor. The memory may be configured to store application program code for executing the technical solutions provided in the embodiments of this application, and the application program code is executed under control of the processor. The processor is configured to execute the application program code stored in the memory, to implement the technical solutions provided in the embodiments of this application.

An embodiment of this application further provides a chip system. The chip system includes a processor, configured to implement the technical methods in the embodiments of the present invention. In a possible design, the chip system further includes a memory, configured to store a program instruction and/or data necessary for the communications devices in the embodiments of the present invention. In a possible design, the chip system further includes a memory, used by the processor to invoke application program code stored in the memory. The chip system may include one or more chips, or may include a chip and another discrete device. This is not specifically limited in this embodiment of this application.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

Persons skilled in the art should be aware that in the foregoing one or more examples, functions described in this application may be implemented by hardware, software, firmware, or any combination thereof. When the functions are implemented by software, these functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general purpose computer a dedicated computer. It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of hardware in addition to a software function unit.

When the foregoing integrated unit is implemented in a form of a software function unit, the integrated unit may be stored in a computer-readable storage medium. The software function unit is stored in a storage medium and includes several instructions for instructing a computer device (which may be a personal computer, a server, or a network device) to perform some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A method for sending a request of service, comprising:
receiving, by a terminal device, first access control information from a first network device; and
in a connected mode, if the first access control information indicates that access of a first service is barred, stopping, by the terminal device, sending a request of service of the first service to the first network device.

2. The method for sending a request of service according to claim 1, wherein the method further comprises:
in the connected mode, if the access of the first service is not barred, sending, by the terminal device, the request of service of the first service to the first network device.

3. The method for sending a request of service according to claim 1, wherein the request of service comprises:
a public data network PDN connection request, a bearer resource modification request, or a service request.

4. The method for sending a request of service according to any one of claims 1 to 3, wherein the receiving, by a terminal device, first access control information from a first network device comprises:
receiving, by the terminal device, a system message from the first network device, wherein the system message comprises the first access control information;
or
receiving, by the terminal device, dedicated signaling from the first network device, wherein the dedicated signaling comprises the first access control information.

5. The method for sending a request of service according to any one of claims 1 to 4, wherein the first access control information comprises at least one of the following information:
enabling indication information, a type of a service allowed to be initiated, a type of a service barred from being initiated, a type of a terminal device allowed to initiate a service, a type of a terminal device barred from initiating a service, or indication information for enabling an access control strategy; and
the enabling indication information is used to indicate whether the terminal device needs to determine, based on the first access control information, whether the access of the first service is barred.

6. The method for sending a request of service according to claim 5, wherein the access control strategy comprises at least one of the following:
an access class barring ACB (Access Class Barring) strategy;
a service-specific access control SSAC (Service Specific Access Control) strategy;
an ACB skip (ACB skip) strategy;
an extended access barring EAB (Extended Access Barring) strategy; or
an application specific congestion control for data communication ACDC (Application specific Congestion control for Data Communication) strategy.

7. The method for sending a request of service according to any one of claims 1 to 6, wherein the terminal device comprises an access AS stratum and a non-access NAS stratum;
the receiving, by a terminal device, first access control information from a first network device comprises: receiving, by the AS stratum, the first access control information from the first network device;
the method further comprises: sending, by the AS stratum, the first access control information to the NAS stratum; and determining, by the NAS stratum based on the first access control information, whether the access of the first service is barred; and
the stopping, by the terminal device, sending a request of service of the first service to the first network device comprises: stopping, by the NAS stratum, sending service request signaling of the first service to the AS stratum.

8. The method for sending a request of service according to any one of claims 1 to 6, wherein the terminal device comprises an access AS stratum and a non-access NAS stratum;
the receiving, by a terminal device, first access control information from a first network device comprises: receiving, by the AS stratum, the first access control information from the first network device;
the method further comprises: extracting, by the AS stratum, first indication information from the first access control information, and sending, by the AS stratum, the first indication information to the NAS stratum; and determining, by the NAS stratum based on the first indication information, whether the access of the first service is barred; and
the stopping, by the terminal device, sending a request of service of the first service to the first network device comprises: stopping, by the NAS stratum, sending service request signaling of the first service to the AS stratum.

9. The method for sending a request of service according to any one of claims 1 to 6, wherein the terminal device comprises an access AS stratum and a non-access NAS stratum;
the receiving, by a terminal device, first access control information from a first network device comprises: receiving, by the AS stratum, the first access control information from the first network device;
the method further comprises: sending, by the NAS stratum in the connected mode, service request signaling of the first service to the AS stratum, and determining, by the AS stratum based on the first access control information and the service request signaling of the first service, whether the access of the first service is barred; and
the stopping, by the terminal device, sending a request of service of the first service to the first network device comprises: stopping, by the AS stratum, sending the service request signaling of the first service to the first network device.

10. The method for sending a request of service according to any one of claims 1 to 6, wherein the terminal device comprises an access AS stratum and a non-access NAS stratum;
the receiving, by a terminal device, first access control information from a first network device comprises: receiving, by the AS stratum, the first access control information from the first network device;
the method further comprises: sending, by the NAS stratum in the connected mode, service request signaling of the first service and access control strategy indication information to the AS stratum, wherein the AS stratum determines, with reference to an access control strategy indicated by the access control strategy indication information and based on the first access control information and the request signaling of the first service, whether the access of the first service is barred.

11. The method for sending a request of service according to claim 9 or 10, wherein the determining, by the AS stratum based on the first access control information and the service request signaling of the first service, whether the access of the first service is barred comprises:
parsing, by the AS stratum, the service request signaling of the first service to obtain a service type of the first service; and determining, by the AS stratum based on the first access control information and the service type of the first service, whether the access of the first service is barred.

12. The method for sending a request of service according to claim 9 or 10, wherein
the method further comprises: when sending the service request signaling of the first service to the AS stratum, further sending, by the NAS stratum in the connected mode, the service type of the first service to the AS stratum; and
the determining, by the AS stratum based on the first access control information and the service request signaling of the first service, whether the access of the first service is barred comprises:
determining, by the AS stratum based on the first access control information and the service type of the first service, whether the access of the first service is barred.

13. A method for sending a request of service, comprising:
determining first access control information, wherein the first access control message is used to control a request of service of a terminal device in a connected mode; and
sending the first access control information.

14. The method for sending a request of service according to claim 13, wherein the request of service comprises:
a public data network PDN connection request, a bearer resource modification request, or a service request.

15. The method for sending a request of service according to claim 13 or 14, wherein the sending the first access control information comprises:
broadcasting a system message, wherein the system message comprises the first access control information; or
sending dedicated signaling, wherein the dedicated signaling comprises the first access control information.

16. The method for sending a request of service according to any one of claims 13 to 15, wherein the first access control information comprises at least one of the following information:
enabling indication information, a type of a service allowed to be initiated, a type of a service barred from being initiated, a type of a terminal device allowed to initiate a service, a type of a terminal device barred from initiating a service, or indication information for enabling an access control strategy; and
the enabling indication information is used to indicate whether the terminal device needs to determine, based on the first access control information, whether the access of the first service is barred.

17. The method for sending a request of service according to claim 16, wherein the access control strategy comprises at least one of the following:
an access class barring ACB (Access Class Barring) strategy;
a service-specific access control SSAC (Service Specific Access Control) strategy;
an ACB skip (ACB skip) strategy;
an extended access barring EAB (Extended Access Barring) strategy; or
an application specific congestion control for data communication ACDC (Application specific Congestion control for Data Communication) strategy.

18. The method for sending a request of service according to any one of claims 13 to 17, wherein
the method further comprises: receiving second access control information from a second network device, wherein the second access control information is used to control the request of service of the terminal device in the connected mode; and
the determining first access control information comprises: determining the first access control information based on the second access control information.

19. The method for sending a request of service according to claim 18, wherein the method further comprises:
sending, to the second network device, load indication information used to indicate a load status.

20. An apparatus for sending a request of service, comprising:
a receiving unit, configured to receive first access control information from a first network device;
a sending unit, configured to send a request of service to the first network device; and
a processing unit, configured to: in a connected mode, if the first access control information indicates that access of a first service is barred, control the sending unit to stop sending the request of service of the first service to the first network device.

21. The apparatus for sending a request of service according to claim 20, wherein the processing unit is further configured to:
in the connected mode, if the access of the first service is not barred, control the sending unit to send the request of service of the first service to the first network device.

22. The apparatus for sending a request of service according to claim 20, wherein the request of service comprises:
a public data network PDN connection request, a bearer resource modification request, or a service request.

23. The apparatus for sending a request of service according to any one of claims 20 to 22, wherein the receiving unit is specifically configured to:
receive a system message from the first network device, wherein the system message comprises the first access control information;
or
receive dedicated signaling from the first network device, wherein the dedicated signaling comprises the first access control information.

24. The apparatus for sending a request of service according to any one of claims 20 to 23, wherein the first access control information comprises at least one of the following information:
enabling indication information, a type of a service allowed to be initiated, a type of a service barred from being initiated, a type of a terminal device allowed to initiate a service, a type of a terminal device barred from initiating a service, or indication information for enabling an access control strategy; and
the enabling indication information is used to indicate whether the terminal device needs to determine, based on the first access control information, whether the access of the first service is barred.

25. The apparatus for sending a request of service according to claim 24, wherein the access control strategy comprises at least one of the following:
an access class barring ACB (Access Class Barring) strategy;
a service-specific access control SSAC (Service Specific Access Control) strategy;
an ACB skip (ACB skip) strategy;
an extended access barring EAB (Extended Access Barring) strategy; or
an application specific congestion control for data communication ACDC (Application specific Congestion control for Data Communication) strategy.

26. The apparatus for sending a request of service according to any one of claims 20 to 25, wherein the apparatus comprises an access AS stratum and a non-access NAS stratum;
the AS stratum is configured to receive the first access control information from the first network device; the AS stratum sends the first access control information to the NAS stratum; and the NAS stratum determines, based on the first access control information, whether the access of the first service is barred; and
in the connected mode, if the first access control information indicates that the access of the first service is barred, the NAS stratum stops sending service request signaling of the first service to the AS stratum.

27. The apparatus for sending a request of service according to any one of claims 20 to 25, wherein the apparatus comprises an access AS stratum and a non-access NAS stratum;
the AS stratum receives the first access control information from the first network device; the AS stratum extracts first indication information from the first access control information, and the AS stratum sends the first indication information to the NAS stratum; and the NAS stratum determines, based on the first indication information, whether the access of the first service is barred; and
in the connected mode, if the first access control information indicates that the access of the first service is barred, the NAS stratum stops sending service request signaling of the first service to the AS stratum.

28. The apparatus for sending a request of service according to any one of claims 20 to 25, wherein the apparatus comprises an access AS stratum and a non-access NAS stratum;
the AS stratum receives the first access control information from the first network device; the NAS stratum in the connected mode sends service request signaling of the first service to the AS stratum, and the AS stratum determines, based on the first access control information and the service request signaling of the first service, whether the access of the first service is barred; and
in the connected mode, if the first access control information indicates that the access of the first service is barred, the AS stratum stops sending the service request signaling of the first service to the first network device.

29. The apparatus for sending a request of service according to any one of claims 20 to 25, wherein the apparatus comprises an access AS stratum and a non-access NAS stratum;
the AS stratum receives the first access control information from the first network device; and the NAS stratum in the connected mode sends service request signaling of the first service and access control strategy indication information to the AS stratum, wherein the AS stratum determines, with reference to an access control strategy indicated by the access control strategy indication information and based on the first access control information and the request signaling of the first service, whether the access of the first service is barred.

30. The apparatus for sending a request of service according to claim 28 or 29, wherein the determining, by the AS stratum based on the first access control information and the service request signaling of the first service, whether the access of the first service is barred comprises:
parsing, by the AS stratum, the service request signaling of the first service to obtain a service type of the first service; and determining, by the AS stratum based on the first access control information and the service type of the first service, whether the access of the first service is barred.

31. The apparatus for sending a request of service according to claim 28 or 29, wherein
when sending the service request signaling of the first service to the AS stratum, the NAS stratum in the connected mode further sends the service type of the first service to the AS stratum; and
the determining, by the AS stratum based on the first access control information and the service request signaling of the first service, whether the access of the first service is barred comprises:
determining, by the AS stratum based on the first access control information and the service type of the first service, whether the access of the first service is barred.

32. An apparatus for sending a request of service, comprising:
a determining unit, configured to determine first access control information, wherein the first access control message is used to control a request of service of a terminal device in a connected mode; and
a sending unit, configured to send the first access control information determined by the determining unit.

33. The apparatus for sending a request of service according to claim 32, wherein the request of service comprises:
a public data network PDN connection request, a bearer resource modification request, or a service request.

34. The apparatus for sending a request of service according to claim 32 or 33, wherein the sending unit is specifically configured to:
broadcast a system message, wherein the system message comprises the first access control information;
or
send dedicated signaling, wherein the dedicated signaling comprises the first access control information.

35. The apparatus for sending a request of service according to any one of claims 32 to 34, wherein the first access control information comprises at least one of the following information:
enabling indication information, a type of a service allowed to be initiated, a type of a service barred from being initiated, a type of a terminal device allowed to initiate a service, a type of a terminal device barred from initiating a service, or indication information for enabling an access control strategy; and
the enabling indication information is used to indicate whether the terminal device needs to determine, based on the first access control information, whether the access of the first service is barred.

36. The apparatus for sending a request of service according to claim 35, wherein the access control strategy comprises at least one of the following:
an access class barring ACB (Access Class Barring) strategy;
a service-specific access control SSAC (Service Specific Access Control) strategy;
an ACB skip (ACB skip) strategy;
an extended access barring EAB (Extended Access Barring) strategy; or
an application specific congestion control for data communication ACDC (Application specific Congestion control for Data Communication) strategy.

37. The apparatus for sending a request of service according to any one of claims 32 to 36, wherein the apparatus further comprises:
a receiving unit, configured to receive second access control information from a second network device, wherein the second access control information is used to control the request of service of the terminal device in the connected mode; and
the determining unit is specifically configured to determine the first access control information based on the second access control information.

38. The apparatus for sending a request of service according to claim 37, wherein the sending unit is further configured to:
send, to the second network device, load indication information used to indicate a load status.

39. An apparatus for sending a request of service, wherein the apparatus comprises a processor, a memory, and an instruction that is stored in the memory and that can be run on the processor, and when the instruction is run, the apparatus is enabled to perform the method for sending a request of service according to any one of claims 1 to 12.

40. An apparatus for sending a request of service, wherein the apparatus comprises a processor, a memory, and an instruction that is stored in the memory and that can be run on the processor, and when the instruction is run, the apparatus for sending a request of service is enabled to perform the method for sending a request of service according to any one of claims 13 to 19.

41. A terminal device, comprising the apparatus for sending a request of service according to claim 39.

42. A network device, comprising the apparatus for sending a request of service according to claim 40.

43. A terminal device, wherein the terminal device comprises a processor, a memory, and a transceiver; and the memory is configured to store a computer-executable instruction, and when the terminal device runs, the processor invokes the computer-executable instruction stored in the memory, to perform the method for sending a request of service according to any one of claims 1 to 12.

44. A network device, wherein the network device comprises a processor, a memory, and a transceiver; and the memory is configured to store a computer-executable instruction, and when the network device runs, the processor invokes the computer-executable instruction stored in the memory, to perform the method for sending a request of service according to any one of claims 13 to 19.

45. A communications system, comprising:
the terminal device according to claim 41 or 43, and the network device according to claim 42 or 44.

46. A computer-readable storage medium, comprising an instruction, wherein when the instruction is run on a computer, the computer is enabled to perform the method for sending a request of service according to any one of claims 1 to 19.

47. A computer program product, wherein when the computer program product runs on a computer, the computer is enabled to perform the method for sending a request of service according to any one of claims 1 to 19.
